# EUROPÄISCHE PATENTSCHRIFT

(11) **EP 1 138 366 B1**
(45) Veröffentlichungstag und Bekanntmachung des Hinweises auf die Patenterteilung: **10.09.2003**
(21) Anmeldenummer: 00127711.0
(22) Anmeldetag: 18.12.2000
(51) Int. Cl.: B01D 39/16, B01J 20/26, B01J 47/00, B01J 49/00

(54) **Verfahren zur Entfernung von Schwebstoffen und kolloidalen Verbindungen aus Lösungen**
Method for separating of suspended materials and colloidal compounds from solutions
Méthode pour séparer des matières en suspension et des composés colloidaux à partir de solutions

(30) Priorität: 28.03.2000 DE 10015113
(43) Veröffentlichungstag der Anmeldung: 04.10.2001
(73) Patentinhaber: Chmiel, Horst, Prof. Dr.-Ing.habil., 66123 Saarbrücken (DE)
(72) Erfinder: Mavrov, Dr. Ing. Valko, 66121 Saarbrücken (DE); Kaschek, Martin, 66386 St. Ingbert (DE); Chmiel, Prof. Dr.-Ing. Horst, 66123 Saarbrücken (DE)
(74) Vertreter: Geissler, Bernhard, Dr. jur., Dipl.-Phys.

(56) Entgegenhaltungen:
- EP-A- 0 551 002
- EP-A- 0 976 437
- US-A- 3 250 703
- US-A- 5 766 288
- DATABASE WPI Section Ch, Week 199435 Derwent Publications Ltd., London, GB; Class J01, AN 1994-282695 XP002177477 & JP 06 210196 A (TOYO NETSU KOGYO KK), 2. August 1994 (1994-08-02)
- DATABASE WPI Section Ch, Week 199748 Derwent Publications Ltd., London, GB; Class J04, AN 1997-516611 XP002177478 & JP 09 243625 A (SHINETSU CHEM IND CO LTD), 19. September 1997 (1997-09-19)
- DATABASE WPI Section Ch, Week 198220 Derwent Publications Ltd., London, GB; Class J01, AN 1982-40276E XP002177479 & JP 57 059612 A (KOBE STEEL LTD), 10. April 1982 (1982-04-10)

## Beschreibung

### Technisches Gebiet

Die Erfindung bezieht sich auf ein Verfahren zur Entfernung von Bestandteilen, wie Schwebstoffen und kolloidalen Verbindungen aus Lösungen und insbesondere wässrigen Lösungen.

Verunreinigte wässrige Lösungen, wie z.B. Oberflächenwasser, Reinigungslaugen, Beizlösungen etc. müssen von Schwebstoffen (z.B. Fasern) und kolloidalen Verbindungen (z.B. Huminstoffe, Proteine oder Polymerflocken) befreit werden, bevor sie einer Feinreinigung z.B. durch Adsorption, Ultrafiltration, Umkehrosmose, UV-Oxidation oder Elektrodialyse unterzogen werden können.

### Stand der Technik

Bei der Tiefenfiltration erfolgt die Abtrennung, im Gegensatz zur Sieb- und Kuchenfiltration, innerhalb des Filtermittels. Die relativ zum Filtermittel kleineren Teilchen werden, hauptsächlich durch Adsorptionsvorgänge, an der Oberfläche des Filtermediums zurückgehalten. Bedingt durch die damit einhergehende Abnahme der Durchlässigkeit der Filterschüttung wird die Tiefenfiltration nur bei relativ geringen Feststoffbeladungen eingesetzt (0,001 bis 0,005 kg/kg). Hierzu wird auf Zogg, Martin: Einführung in die mechanische Verfahrenstechnik, B.G. Teubner Stuttgart 1993, S. 128 ff] verwiesen.

So ist es bekannt, Schwebstoffe, kolloidale Verbindungen etc. mit einem Kiesfilter bzw. Sandfilter abzuscheiden. Dieser Filter muß zyklisch rückgespült werden, um ihn zu regenerieren (vgl. ebenfalls M. Zogg, S. 128 ff). Vor allem bei pH-Werten der wässrigen Lösung, die deutlich außerhalb des Neutralbereiches liegen, besteht ferner die Gefahr, daß Silizium aus dem Kies bzw. Sand (herausgelöst) ausgewaschen wird und den nachfolgenden Feinreinigungsprozeß beeinträchtigt. So beobachtet man bei nachgeschalteten Membranen ein sogenanntes Scaling, d.h. Ablagerungen, insbesondere von Si/Ca-Verbindungen. In diesen Fällen verbietet sich der Einsatz von Kies- bzw. Sandfiltern.

Andere partikuläre Materialien, wie z.B. Aktivkohlen, neutrale Polymerpartikel oder sonstige poröse Adsorbentien erfüllen zwar die Aufgabe der Vorreinigung, lassen sich aber nicht oder nur mit großem Aufwand regenerieren, weil die stets in wässrigen Lösungen vorhandenen organischen Verunreinigungen auf der Oberfläche der partikulären Materialien adsorbieren. Sie verblocken zusammen mit den Schwebstoffen den Filter so, daß dieser nicht mehr rückgespült werden kann und entsorgt werden muß. Dies ist mit beträchtlichen Kosten verbunden.

Ferner ist es bekannt, mit mehrschichtigen Schüttungen bestehend aus Filtersand und Hydroanthrazit zu arbeiten. Bei derartigen mehrschichtigen Schüttungen werden auch die tieferen Schichten der Schüttung genutzt, in denen die kleineren Teilchen zurückgehalten werden. Bei der Mehrschichtfiltration kann man mit um ca. 30% höheren Filtergeschwindigkeiten arbeiten bzw. es werden entsprechend längere Filterlaufzeiten erreicht. Hierzu wird auf das Buch von Hancke, Klaus: Wasseraufbereitung, Springer-Verlag Berlin Heidelberg 1998, S. 121 verwiesen.

Auf alle vorstehend sowie nachfolgend noch genannten Literaturstellen wird im übrigen zur Erläuterung aller hier nicht näher beschriebenen Einzelheiten ausdrücklich Bezug genommen.

### Darstellung der Erfindung

Der Erfindung liegt die Aufgabe zugrunde, ein Verfahren zur Entfernung von Bestandteilen, wie Schwebstoffen und kolloidalen Verbindungen aus wässrigen Lösungen mittels Filtration, bei dem die wässrige Lösung insbesondere einer Vorreinigung zum Abtrennen von Bestandteilen wie Schwebstoffen und/ oder kolloidalen Verbindungen unterzogen wird, derart weiterzubilden, daß die Vorreinigung effektiv mit einem regenerierbaren Vorreinigungsmittel ausgeführt wird.

Eine erfindungsgemäße Lösung dieser Aufgabe ist im Patentanspruch 1 angegeben. Weiterbildungen der Erfindung sind Gegenstand der Ansprüche 2 folgende.

Der Erfindung liegt folgender Gedanke zugrunde:

Ein Tiefenfilter wird mit einer elektrischen Festladung dergestalt versehen, daß seine Ladung gleichnamig zu der Ladung der aus einer verunreinigten Lösung abzutrennenden Bestandteile ist. Beispielsweise tragen Proteine - abhängig von ihrem Gehalt an ionisierbaren Aminosäuren und dem pH-Wert der umgebenden Lösung - bei einem pH-Wert oberhalb des isoelektrischen Punktes - eine negative Ladung, unterhalb des isoelektrischen Punktes eine positive Ladung. Hierzu wird auf H. Chmiel, Bioprozeßtechnik I, G. Fischer Verlag, 1991, S. 51 verwiesen. Überraschend wurde nun gefunden, daß, wenn man einen Tiefenfilter mit gleicher elektrischer Ladung wie die Ladung der aus einer verunreinigten Lösung zu entfernenden Schwebstoffe ausrüstet, der Filter wesentlich effektiver arbeitet und bei der nachfolgenden Rückspülung wesentlich einfacher zu reinigen ist.

So wurde beispielsweise die verunreinigte 2%-ige Natronlauge der Flaschenwaschmaschine einer Brauerei über ein Schüttbett negativ geladener, makroporöser, vernetzter Polystyrolpartikel geleitet und dabei die Trübstoffe zu ca. 80% entfernt. Anschließend konnte dieses Schüttbett durch Rückspülung mit Wasser sehr einfach wieder von den darin befindlichen Schwebstoffen befreit werden. Im Gegensatz hierzu ergab ein Filtration dieser verschmutzten Lauge über ein Schüttbett mit einem neutralen Polymeradsorbens nur eine Reduktion der Trübung um 2,7%. Dieses Beispiel liegt dem Anspruch 2 zugrunde.

Bei der Verwendung von gelförmigen vernetzten Polystyrolpartikeln und sonst gleicher Verfahrensweise konnte sogar eine Reduktion der Trübung um 96% erreicht werden. Diese Befund ist Gegenstand des Anspruchs 3. Weiterbildungen der Erfindung sind Gegenstand der Ansprüche 4 und folgende

Werden diese geladenen Partikel in einem Schüttbett mit ausreichender Höhe - bevorzugt mindestens 50 cm - angeordnet und von der wässrigen Lösung, aus der Bestandteile wie Schwebstoffe und/ oder kolloidale Verbindungen abgetrennt werden sollen, durchströmt, so erfüllen sie in vollem Umfang die Wirkung eines Filters, d.h. sie entfernen sowohl Schwebstoffe als auch kolloidale Verbindungen aus wässrigen Lösungen. Die geladenen Partikel lassen sich aber im Gegensatz zu den o.g. Filtermaterialien problemlos mit sauberem Wasser oder einer wässrigen Lösung rückspülen, regenerieren und praktisch beliebig oft wiederverwenden.

Dieses Verhalten läßt sich damit erklären, daß die meisten organischen Verbindungen negativ geladen sind und deshalb nicht auf dem ebenfalls negativ geladenen Partikel, adsorbieren, sondern nur locker auf der Oberfläche lagern und daher leicht durch Rückspülen entfernt werden können.

Um eine ausreichende Filterwirkung und Standzeit bei nicht zu hohem Druckverlust zu erzielen, muß die Höhe des mit geladenen Partikeln und insbesondere mit Kationenaustauscherpartikeln gefüllten Filters geeignet gewählt werden.

In jedem Falle erhält man durch den Einsatz eines erfindungsgemäßen Filters eine verbesserte Reinigung der verunreinigten Fluide und anschließend eine leichtere Reinigung des Filters selbst.

Das Filtergehäuse entspricht von der Konstruktion her einem Sandfilter (Siebboden), die Filterschüttung besteht bevorzugt aus Ionentauscherharz, wobei es sich um gebrauchtes, nicht mehr funktionsfähiges Harz handeln kann. Durch die Wahl eines entsprechenden Harzes ist der Filter temperaturstabil bis 120°C und stabil gegen pH-Werte vonl bis 14. Durch die Wahl der Körnung und Art des Harzes können unterschiedliche Trenneigenschaften erreicht werden. Die sehr glatte Oberfläche und die geringe Dichte des Harzes bewirken sehr gute Rückspüleigenschaften.

### Kurze Beschreibung der Zeichnung

Die Erfindung wird nachstehend anhand von Ausführungsbeispielen ohne Beschränkung der Allgemeinheit unter Bezugnahme auf die Zeichnungen näher beschriebenen, in der zeigen:
- Fig. 1a und b: den prinzipiellen Aufbau einer Vorrichtung zur Durchführung des erfindungsgemäßen Verfahrens,
- Fig. 2a bis e: die Betriebsweise einer realen Vorrichtung, und
- Fig. 3: tabellarisch experimentelle Ergebnisse der Filtration von Waschlauge,

### Darstellung von Ausführungsbeispielen

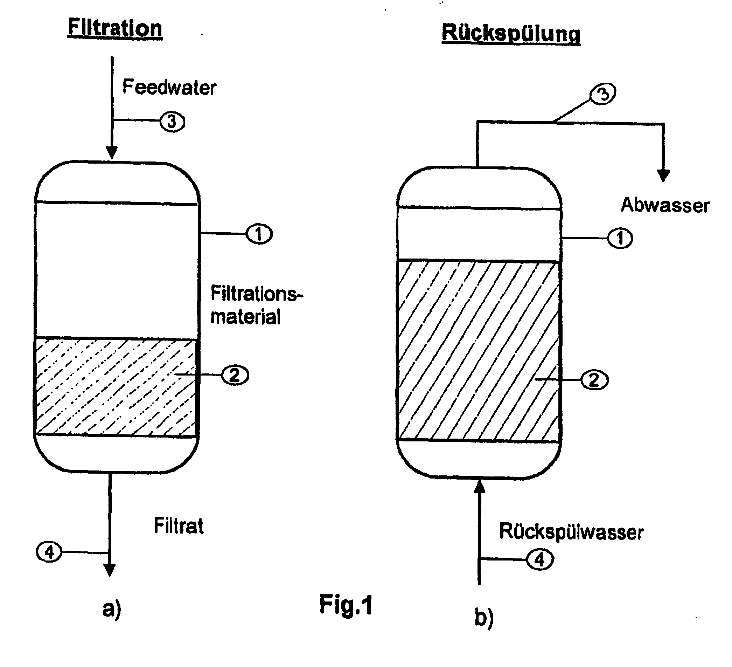

Fig. 1 zeigt den Aufbau einer erfindungsgemäßen Vorrichtung zur Durchführung des erfindungsgemäßen Verfahrens. In einem Behälter 1 ist ein erfindungsgemäß ausgebildetes Filtrationsmaterial 2 in Form eines Schüttbetts angeordnet.
Fig. 1a zeigt den Filtrationsvorgang, bei dem sogenanntes "Feedwater", also beispielsweise eine wässrige Lösung, die Schwebstoffe und/oder kolloidale Verbindungen enthält, dem Behälter 1 über eine Leitung 3 zugeleitet wird. Das Filtrat wird über eine Leitung 4 entnommen, die Schwebstoffe und/oder die kolloidalen Verbindungen bleiben in dem Schüttbett 2 zurück.
Fig. 1b zeigt die Reinigung des Schüttbettes 2. Über die Leitung 4 wird Rückspülwasser zugeführt, das das Schüttbett 2 in Gegenrichtung zum Filtrationsvorgang durchströmt. Das Abwasser, das die zuvor, d. h. beim Filtrationsvorgang vom Schüttbett 2 aufgenommenen Teilchen enthält, wird über die Leitung 3 entnommen.

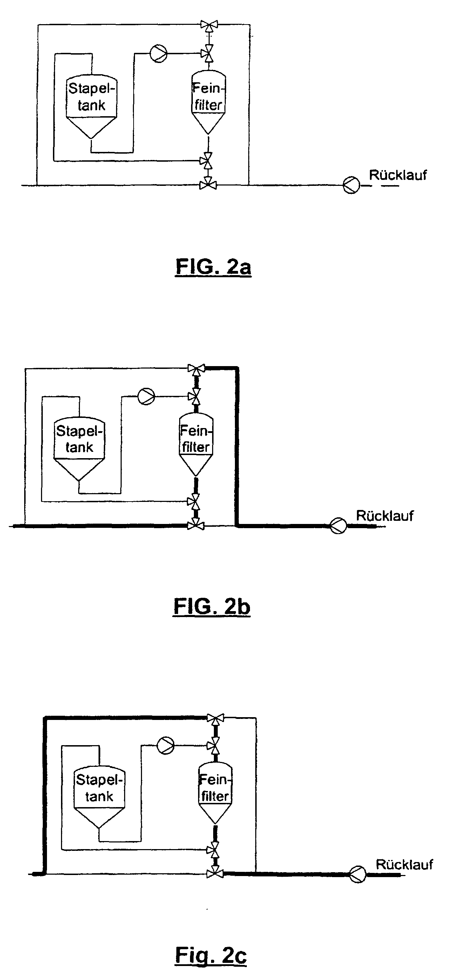

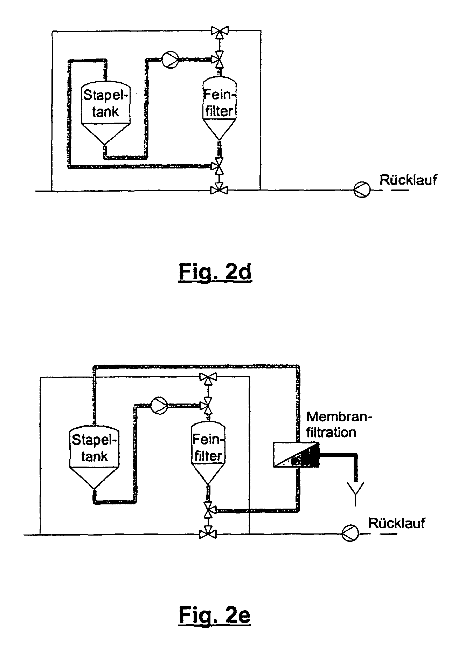

Fig. 2a zeigt die Integration eines erfindungsgemäßen Filters (Feinfilter) in einen CIP-Kreislauf (Clearing in Place), in dem auch ein Stapeltank vorgesehen ist, dessen Funktion später noch erläutert wird. Bezüglich der weiteren Komponenten, wie Leitungen, Ventile etc. wird auf die Fig.2 verwiesen, in denen diese Komponenten mit den üblichen Symbolen eingezeichnet sind.
Fig. 2b zeigt den Betrieb des Feinfilters im Reinigungskreislauf der CIP-Station. Der Einsatz des Filters erfolgt während der Vorspülung im (fett dargestellten) Reinigungsrücklauf. Dadurch wird die Schmutzfracht kontinuierlich aus dem Reinigungskreislauf entfernt, so daß sich die Reinigungsleistung der Vorspülung erheblich verbessert. Die durchströmten Leitungen sind in Fig. 2b - wie auch in den folgenden Figuren - fett dargestellt.

Vor dem Beenden der Vorspülung wird die Anströmung des Filters umgekehrt, so daß der Filter ohne zusätzlichen Wasserverbrauch rückgespült wird und die Schmutzfracht dadurch mit einem sehr kleinen Volumenstrom ausgetragen wird; dies ist in Fig. 2c dargestellt, die die Rückspülung des Feinfilters beim Ausschleusen der Vor- bzw. Zwischenspülung zeigt.

Bei dem nachfolgenden chemischen CIP-Ablauf wird analog verfahren, falls Feststoffe in der Waschlösung zu erwarten sind. Die Rückspülung kann dann mit Wasser aus der Zwischen- oder Nachspülung erfolgen, so daß auch hier keine zusätzlichen Verbräuche zu erwarten sind (Fig. 2b und 2c).

In den Ruhezeiten zwischen zwei CIP-Reinigungen kann der Filter die in dem Tank gestapelte Waschlösung weiter aufreinigen. Hier wird die Filtrationsgeschwindigkeit sehr klein gewählt, so daß sich auch kolloidal gelöste Stoffe an den Harzpartikeln anlagern und so eine möglichst gute Reinigung der Waschlösung erreicht wird. Fig. 2d zeigt die Klarfiltration der gestapelten Reinigungslösung in den CIP-Pausen.

Sollte die Waschlauge sehr stark mit gelösten Inhaltsstoffen verunreinigt sein, so kann eine weitere Reinigung mittels Membranverfahren sinnvoll sein. Dies ist in Fig. 2e dargestellt, die die Klarfiltration der gestapelten Reinigungslösung in den CIP-Pausen mit integrierter Membranfiltration zeigt.

Bei der Auswahl der Trenngrenze muß man berücksichtigen, daß bei sehr kleinen Trenngrenzen (Nanofiltration) ein großer Teil der Tenside, sofern vorhanden, entfernt wird. Die Ultrafiltration kann einen Kompromiß zwischen Rückhalt der Schmutzfracht und Verbleib der Tenside in der Lösung darstellen. Allerdings muß bei allen Membranfiltrationen eine möglichst hohe Ausbeute angestrebt werden, um Kostenvorteile gegenüber dem Verdünnen der Waschlösung erzielen zu können. Der Feinfilter sollte in jedem Fall als Vorfilter zu allen Membranverfahren eingesetzt werden, um diese notwendigen hohen Ausbeuten zu erreichen. Die Mikrofiltration hat eine nur unwesentlich bessere Trennung als der vorgeschlagene Feinfilter und sollte deshalb nicht betrachtet werden.

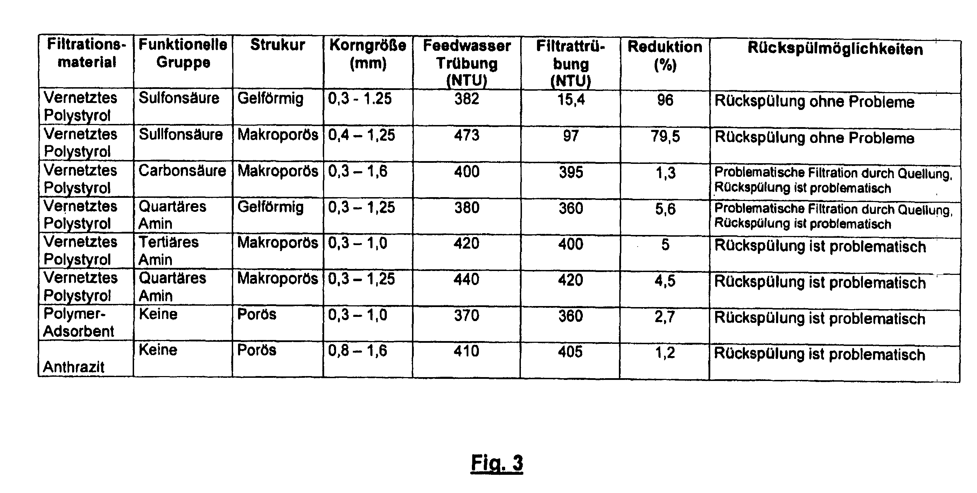

Fig. 3 zeigt tabellarisch experimentelle Ergebnisse der Filtration von 2% Waschlauge mit einem pH-Wert von 13,4. Deutlich sind die überlegenen Ergebnisse des erfindungsgemäßen Verfahrens im Vergleich zum Stand der Technik zu sehen.

Vorstehend ist die Erfindung ohne Beschränkung der Allgemeinheit anhand von Ausführungsbeispielen beschrieben worden.

## Patentansprüche

1. Verfahren zur Entfernung von Schwebstoffen und kolloidalen Verbindungen aus Lösungen und insbesondere wässrigen Lösungen, **dadurch gekennzeichnet, dass** zum Abtrennen der Schwebstoffe bzw. der kolloidalen Verbindungen die zu reinigende wässrige Lösung wenigstens ein Tiefenfilter in Form eines Schüttbetts durchströmt, das aus Partikeln besteht, die eine elektrische Festladung aufweisen, die gleichnamig zu der Ladung der abzutrennenden Bestandteile ist.

2. Verfahren nach Anspruch 1,
**dadurch gekennzeichnet, dass** die Partikel des Schüttbetts negativ geladen sind.

3. Verfahren nach Anspruch 1 oder 2,
**dadurch gekennzeichnet, dass** als Schüttbett ein mehrschichtiges Schüttbett verwendet wird.

4. Verfahren nach einem der Ansprüche 1 oder 2,
**dadurch gekennzeichnet, dass** die Partikel gelförmige Kationenaustauscher sind.

5. Verfahren nach einem der Ansprüche 1 bis 4,
**dadurch gekennzeichnet, dass** der Tiefenfilter zur Regeneration mit Wasser oder einer wässrigen Lösung zyklisch rückgespült wird.

6. Verfahren nach einem der Ansprüche 1 bis 6,
**dadurch gekennzeichnet, dass** ein verbrauchter Ionentauscher verwendet wird.

7. Verfahren nach einem der Ansprüche 1 bis 6,
**dadurch gekennzeichnet, dass** Reinigungsfluide in CIP-Anlagen (Vorspülwasser, Lauge, Zwischenspülwasser und Säure) während des CIP-Prozesses kontinuierlich gereinigt und durch das Vor-, Zwischen- und Nachspülwasser rückgespült werden.

8. Verfahren nach einem der Ansprüche 1 bis 6,
**dadurch gekennzeichnet, dass** gestapelte Reinigungsfluide in CIP-Anlagen (Stapelwasser, Lauge und Säure) nach einem CIP-Prozess gereinigt werden.

9. Verfahren nach einem der Ansprüche 1 bis 6,
**dadurch gekennzeichnet, dass** Reinigungsfluide in industriellen Waschmaschinen kontinuierlich gereinigt werden.

10. Verfahren nach einem der Ansprüche 1 bis 6,
**dadurch gekennzeichnet, dass** es als Vorfiltration für weitergehende Separationsverfahren eingesetzt wird.

11. Verwendung eines Verfahrens nach einem der Ansprüche 1 bis 10 in einem CIP-Prozess.

12. Verwendung des Verfahrens nach Anspruch 11 zusammen mit einem Stapeltank zur weitergehenden Reinigung in CIP-Pausen.

## Claims

1. A process for the removal of suspended matter and colloidal compounds from solutions, particularly aqueous solutions **characterised in that** the aqueous solution, from which the suspended matter and the colloidal compounds are to be removed, passes through at least one deep-bed filter in the form of a filter bed consisting of particles which have a fixed electric charge equivalent to the charge of the components to be separated.

2. A process according to Claim 1,
**characterised in that** the particles in the filter bed have a negative charge.

3. A process according to Claim 1 or 2,
**characterised in that** a multi-layer filter bed is used as a filter bed.

4. A process according to Claim 1 or 2,
**characterised in that** the particles are gel-like cation exchangers.

5. A process according to any of the Claims 1 to 4,
**characterised in that** the deep-bed filter is backflushed with water or with an aqueous solution at regular intervals for purposes of regeneration.

6. A process according to any of the Claims 1 to 5,
**characterised in that** an exhausted ion exchanger is used.

7. A process according to any of the Claims 1 to 6,
**characterised in that** the washing solutions in the CIP plant (pre-rinsing water, alkaline solution, intermediate rinsing water and acid) are treated continuously during the CIP process and the filter is backflushed by the pre-rinsing, intermediate and post-rinsing water.

8. A process according to any of the Claims 1 to 6,
**characterised in that** the washing solutions, stored in the CIP plant, (stored water, base and acid) are treated after the CIP process.

9. A process according to any of the Claims 1 to 6,
**characterised in that** the washing solutions in industrial washing machines are treated periodically.

10. A process according to any of the Claims 1 to 6,
**characterised in that** it is used as a pre-filtration stage for further separation processes.

11. Use of a process according to any of the Claims 1 to 10,
in a CIP process.

12. Use of the process according to Claim 11 together with a storage tank for purposes of further cleaning during breaks in CIP processes.

## Revendications

1. Procédé pour séparer la matière en suspension et les composés colloïdaux dans des solutions, en particulier des solutions aqueuses, **caractérisé en ce que** la solution aqueuse de laquelle la matière suspendue et les composés colloïdals doivent être enlevés passe à travers au moins un filtre à lit profond sous forme d'une couche filtrante qui est composée de particules ayant une charge électrique fixe ayant le même signe que les composants qui doivent être séparés.

2. Procédé selon la Revendication 1,
**caractérisé en ce que** les particules dans la couche filtrante possèdent une charge négative.

3. Procédé selon la Revendication 1 ou 2,
**caractérisé en ce qu'**une installation de filtration multicouche est utilisée comme couche filtrante.

4. Procédé selon la Revendication 1 ou 2,
**caractérisé en ce que** les particules échangeuses de cations se présentent sous forme de gel.

5. Procédé selon une quelconque des Revendications 1 à 4
**caractérisé en ce que** le rétrolavage du filtre à lit profond est effectué régulièrement en utilisant de l'eau ou une solution aqueuse pour la régénération du filtre.

6. Procédé selon une quelconque des Revendications 1 à 5
**caractérisé en ce qu'** un échangeur d'ions usagé est employé.

7. Procédé selon une quelconque des Revendications 1 à 6
**caractérisé en ce que** les solutions de lavage dans l'installation CIP (l'eau de pré-rinçage, la lessive alcaline, l'eau de rinçage intermédiaire et l'acide) sont nettoyées de façon continue pendant le procédé CIP et **en ce que** l'eau de pré-rinçage ainsi que les eaux de rinçage intermédiaire et final sont employées pour le rétrolavage du filtre.

8. Procédé selon une quelconque des Revendications 1 à 6
**caractérisé en ce que** les solutions de lavage accumulées dans l'installation CIP (l'eau, la base, l'acide) sont traitées après le procédé CIP.

9. Procédé selon une quelconque des Revendications 1 à 6
**caractérisé en ce que** les solutions de lavage dans les machines à laver industrielles sont traitées de façon continue.

10. Procédé selon une quelconque des Revendications 1 à 6
**caractérisé en ce qu'**il est utilisé comme une opération de pré-filtration avant des procédés de séparation ultérieurs.

11. L'utilisation d'un procédé selon une quelconque des Revendications 1 à 10 dans un procédé CIP.

12. L'utilisation du procédé selon la Revendication 11 en utilisant un réservoir de stockage pour réaliser un nettoyage intermédiaire pendant les intervalles d'arrêt dans les procédés CIP.
